# EUROPÄISCHE PATENTANMELDUNG

(11) **EP 4 338 816 A1**
(43) Veröffentlichungstag der Anmeldung: **20.03.2024**
(21) Anmeldenummer: 23197580.6
(22) Anmeldetag: 15.09.2023
(51) Int. Cl.: B01D 46/00, B01D 46/48

(54) **VORRICHTUNG UND VERFAHREN ZUR AUFNAHME VON PARTIKELN**

(30) Priorität: 16.09.2022 DE 102022209732
(71) Anmelder: ULT AG, 02708 Löbau (DE)
(72) Erfinder: Jakschik, Stefan, 02708 Löbau (DE); Schütze, Ronny, 02625 Bautzen (DE); Kaminski, Eric, 02708 Löbau (DE)
(74) Vertreter: Pfenning, Meinig & Partner mbB

(57) **Zusammenfassung**

Die vorliegende Erfindung betrifft eine Vorrichtung zur Aufnahme von Partikeln, mit einem Auffangelement (5, 6) mit einer Öffnung und einem an die Öffnung des Auffangelements (5, 6) anbringbaren Anschlusselement (4). Das Auffangelement (5, 6) ist über das Anschlusselement (4) mit einem öffen- und schließbares kombiniertes Anschluss- und Verschlusselement (3) eines Abscheiders (1) verbindbar, wobei im Falle des mit dem Abscheider (1) verbundenen Auffangelements (5, 6) die Partikel aus dem Abscheider (1) kommend durch das geöffnete kombinierte Anschluss- und Verschlusselement (3) durch die Öffnung des Auffangelements (5, 6) in das Auffangelement (5, 6) gelangen, und im Falle des mit den Partikeln gefüllten Auffangelements (5, 6) das kombinierte Anschluss- und Verschlusselement (3) verschließbar ist, das Auffangelement (5, 6) von dem Abscheider (1) getrennt und verschlossen sowie im geschlossenen Zustand entnommen werden kann.

## Beschreibung

Die vorliegende Erfindung betrifft eine Vorrichtung und ein Verfahren zur Aufnahme von Partikeln.

Bei bestimmten Herstellungsverfahren, beispielsweise generativen pulverbasierten Herstellungsverfahren mit einem auslenkbaren Energiestrahl wie einem Laserstrahl, werden Partikel lokal definiert miteinander verbunden, beispielsweise versintert. Es bilden sich aber auch aus temporär in die Gasphase überführtem Metall sehr feine Partikel, die chemisch sehr reaktiv sind und bei denen es in Kontakt mit Sauerstoff zu spontanen Oxidationsreaktionen kommt. Ein diese Partikel enthaltendes Rohgas wird daher abgesaugt und die Partikel separiert und sicher gelagert. Beispielsweise offenbart das Dokument DE 10 2017 213 042 A1 eine entsprechende Vorrichtung für eine Separation und sichere Aufnahme von Partikeln. Nachteilig an solchen aus dem Stand der Technik bekannten Lösungen ist jedoch, dass Sammelbehälter für die Partikel oftmals schwierig zu handhaben sind und auch die Entnahme der Partikel aus dem Sammelbehälter umständlich ist. Mitunter werden allerdings die Partikel auch von einem einseitig offenen Behältnis aufgenommen und in diesem offenen Zustand entnommen, was unter Sicherheitsaspekten problematisch ist, da die Partikel wieder entweichen können.

Der vorliegenden Erfindung liegt daher die Aufgabe zugrunde, eine Vorrichtung und ein Verfahren vorzuschlagen, mit denen diese Nachteile vermieden werden, mit denen also Partikel sicher separiert und gelagert werden können.

Erfindungsgemäß gelöst wird diese Aufgabe durch eine Vorrichtung und ein Verfahren nach den unabhängigen Ansprüchen. Vorteilhafte Ausgestaltungen und Weiterbildungen sind in den abhängigen Ansprüchen beschrieben.

Eine Vorrichtung zur Aufnahme von Partikeln bzw. zum Aufnehmen von Partikeln weist ein Auffangelement mit einer Öffnung und ein an die Öffnung des Auffangelements anbringbares Anschlusselement auf. Das Auffangelement ist über das Anschlusselement mit einem öffen- und schließbaren kombinierten Anschluss- und Verschlusselement eines Abscheiders verbindbar. Im Falle des mit dem Abscheider verbundenen Auffangelements gelangen die Partikel aus dem Abscheider kommend durch das geöffnete kombinierte Anschluss- und Verschlusselement durch die Öffnung des Auffangelements in das Auffangelement. Im Fall des mit den Partikeln gefüllten Auffangelements ist das kombinierte Anschluss- und Verschlusselement verschließbar und das Auffangelement kann von dem Abscheider getrennt und verschlossen sowie im geschlossenen Zustand entnommen werden.

Da somit eine Verbindung mit dem Abscheider herstellbar ist, bei der Partikel nicht entweichen können und dennoch von dem Auffangelement aufgenommen werden, wird eine sichere Aufnahme der Partikel gewährleistet. Nach Befüllen des Auffangelements ist dieses allerdings verschließbar, beispielsweise durch einen Verschlussstopfen, der auf das Anschlusselement aufgesetzt wird, oder durch einen Deckel, der auf das Auffangelement bereits vor dem Befüllen aufgebracht wurde und auch das Anschlusselement selbst oder zumindest einen Adapter für das Anschlusselement aufweisen kann. Somit werden die abgeschiedenen Partikel allseitig umschlossen und können sicher transportiert werden.

Es kann vorgesehen, sein, dass in dem Auffangelement oder an dem Anschlusselement mindestens ein Filterelement angeordnet ist, um auch ein derartiges Filterelement, in dem die Partikel aufgenommen sind, sicher entnehmen und entsorgen zu können.

Alternativ oder zusätzlich kann in dem Auffangelement mindestens ein Inertisierungsmittel enthalten sein, um das Durchführen unerwünschter Oxidationsreaktionen bei Kontakt mit Sauerstoff zu verhindern. Das Inertisierungsmittel kann als Feststoff, als Flüssigkeit oder als Gas vorliegen.

Das Auffangelement kann als starrer Sammelbehälter, als flexibler Auffangbehälter oder als in dem Sammelbehälter angeordneter Auffangbehälter ausgestaltet sein. Der starre Sammelbehälter ist hierbei mechanisch stabil und bietet daher eine erhöhte Sicherheit gegen ein ungewolltes Entweichen der Partikel während der flexible Auffangbehälter (worunter insbesondere ein nicht formstabiles bzw. elastisches Behältnis fallen soll) auch bei schwierigen geometrischen Bedingungen eingesetzt werden kann.

Der Sammelbehälter kann hierbei ein Fass, eine Tonne, ein Deckelfass, ein Spundfass, ein Hobbock, ein Weithalsfass oder ein nestbares Fass sein und ist vorzugsweise aus Kunststoff ausgebildet. In weiteren Ausführungsformen kann der Sammelbehälter allerdings auch aus Stahl oder Pappe gefertigt sein. Eine Dichtung kann im Deckel oder im Sammelbehälter selbst integriert sein oder es wird eine separate Dichtung zum Einlegen verwendet. Typischerweise hat der Sammelbehälter ein Füllvolumen von bis zu 220 l und bzw. oder ein Füllgewicht von bis zu 400 kg und ist technisch gasdicht ausgebildet.

Es kann auch eine Vorrichtung vorgesehen sein, die einen Sammelbehälter und einen Auffangbehälter aufweist. Der Auffangbehälter weist eine Öffnung auf bzw. kann einseitig offen ausgebildet sein und ist innerhalb des Sammelbehälters anordenbar bzw. befestigbar und aus dem Sammelbehälter entnehmbar. Der Sammelbehälter ist über ein Anschlusselement des Sammelbehälters mit einem öffenbaren und schließbaren kombinierten Anschluss- und Verschlusselement eines Abscheiders verbindbar. Der Auffangbehälter kann derart in dem Sammelbehälter angeordnet sein bzw. derart in dem Sammelbehälter angeordnet werden, dass bei im Falle des mit dem Abscheider verbundenen Sammelbehälters die Partikel aus dem Abscheider kommend durch das geöffnete kombinierte Anschluss- und Verschlusselement durch die Öffnung des Auffangbehälters in den Auffangbehälter gelangen. Im Fall des mit den Partikeln gefüllten Auffangbehälters ist das kombinierte Anschluss- und Verschlusselement verschließbar und der Sammelbehälter kann von dem Abscheider getrennt werden sowie in der Regel nachfolgend der Auffangbehälter aus dem Sammelbehälter entnommen werden.

Dadurch, dass der Auffangbehälter in den Sammelbehälter eingesetzt und aus diesem auch wieder entnommen werden kann, ergibt sich eine einfache Möglichkeit, Partikel in dem Auffangbehälter zu sammeln und sicher zu verwahren, diese aber auch einfach aus dem Sammelbehälter zu entnehmen, so dass dieser Sammelbehälter, gegebenenfalls mit einem leeren neuen Auffangbehälter versehen, wiederverwendet werden kann. Über das Anschlusselement ist der Sammelbehälter zum Aufnehmen der Partikel zumindest für einen bestimmten Zeitraum mit dem Anschluss- und Verschlusselement des Abscheiders verbindbar, so dass die Partikel sicher von dem Abscheider in den Sammelbehälter und den im Sammelbehälter angeordneten Auffangbehälter gelangen. Da die Öffnung des Auffangbehälter bei der Anordnung des Auffangbehälters in dem Sammelbehälter typischerweise dem Anschlusselement gegenüberliegend oder zumindest in Richtung des Anschlusselements weisend angeordnet ist, können die Partikel auch direkt von dem Abscheider über das Anschlusselement und die Öffnung in den Auffangbehälter gelangen. Da beispielsweise bei Erreichen einer bestimmten Füllhöhe das kombinierte Anschluss- und Verschlusselement geschlossen werden kann, der Sammelbehälter danach von dem Abscheider abgenommen und der Auffangbehälter aus dem Sammelbehälter entnommen werden kann, können die in dem Auffangbehälter enthaltenen Partikel sicher entsorgt werden.

In dem Auffangelement, d. h. In bzw. an dem Sammelbehälter und bzw. oder in bzw. an dem Auffangbehälter, kann mindestens ein Füllstandssensor angeordnet sein, um zu messen, wie stark gefüllt das Auffangelement ist und wann eine Entnahme des Auffangelements zu erfolgen hat. Der Füllstandssensor kann ein Sensorsignal an eine Auswerteeinheit übermitteln, die bei Erreichen eines bestimmten Füllstands eine Steuereinheit anweist, automatisiert einen Wechsel des Auffangelements durchzuführen oder ein entsprechendes Signal an einen menschlichen Benutzer ausgibt.

Der mindestens eine Füllstandssensor kann dabei am kombinierten Anschluss- und Verschlusselement, am Sammelbehälter, im Sammelbehälter, am Auffangbehälter und bzw. oder im Auffangbehälter angeordnet sein, um möglichst zuverlässig den Füllstand zu ermitteln. Der mindestens eine Füllstandssensor wird hierbei abnehmbar anbringbar über einen Füllstandssensoradapter befestigt, der typischerweise als Hülse oder als Sackloch ausgebildet ist. Somit kann bei gefülltem Auffangelement der Füllstandssensor wieder von dem Auffangelement entfernt und weiterbenutzt werden.

Der Füllstandssensor kann als kapazitiver Sensor, als optischer Sensor, als induktiver Sensor und bzw. oder als Ultraschallsensor ausgebildet sein und eine zylindrische oder quaderförmige Form aufweisen. In der Regel kommt der Füllstandssensor mit den Partikeln nicht in Kontakt, sondern ist zumindest durch das Auffangelement von diesen getrennt.

Das Anschlusselement bzw. Adapterelement ist typischerweise ein Klemmflansch und bzw. oder eine Kupplung und dient ebenfalls einem passiven Partikelaustrag durch die Schwerkraft. Realisiert wird dies durch einen gasdichten Anschluss des Auffangelements an das kombinierte Anschluss- und Verschlusselement. Die Höhe des Anschlusselements ist hierbei variabel wählbar, entspricht vorzugsweise aber mindestens einem Durchmesser oder einer Breite des Anschlusselements. Das Anschlusselement ist in der Regel zylinderförmig, kann aber auch quaderförmig sein, und ist typischerweise aus dem Werkstoff des Auffangelements ausgebildet, also in der Regel aus Kunststoff. Es kann vorgesehen sein, das Anschlusselement mit dem Verschlussstopfen verschließen zu können, so dass es lediglich zu einem minimalen Gasaustausch zwischen der Vorrichtung und der Umgebung beim Trennvorgang des Anschlusselements vom kombinierten Anschluss- und Verschlusselement kommt. Das Auffangelement kann als separates Bauteil und an das Auffangelement abnehmbar anbringbar ausgestaltet sein.

Typischerweise ist der Auffangbehälter elastisch ausgebildet, also insbesondere nicht formstarr und kann ein Foliensack aus Kunststoff sein. Der Auffangbehälter kann auch als Rundbodensack bzw. Seitenfaltbeutel ausgebildet sein und weist in der Regel einen Kunststoff wie LDPE (Polyethylen niedriger Dichte, low-density polyethylene), HDPE (Polyethylen hoher Dichte, high-density polyethylene), PP (Polypropylen) oder POM (Polyoxymethylen) oder besteht aus diesem Kunststoff. Der Sammelbehälter kann aus dem gleichen Werkstoff wie der Auffangbehälter aufgebaut sein, jedoch auch einen anderen Werkstoff aufweisen. Insbesondere kann der Sammelbehälter auch aus LDPE, HDPE, PP oder POM bestehen oder diese Werkstoffe zumindest aufweisen. Hinsichtlich einer elektrischen Leitfähigkeit kann der Auffangbehälter sowohl elektrisch isolierend als auch elektrisch leitfähig bzw. antistatisch ausgebildet sein. Ein Anschluss an das Adapterelement kann durch eine Klebeverbindung, eine Schweißverbindung und bzw. oder eine Schraubverbindung erfolgen. Falls ein Füllstandssensor vorgesehen ist, kann der Auffangbehälter auch mit dem Füllstandssensoradapter durch eine Klebeverbindung, eine Schweißverbindung und bzw. oder eine Schraubverbindung verbunden sein. Auch der Auffangbehälter ist typischerweise technisch gasdicht ausgebildet und weist eine Überdruckfestigkeit bis +200 mbar und eine Unterdruckfestigkeit bis -150 mbar auf.

Das kombinierte Anschluss- und Verschlusselement, das auch als "Absperrelement" bezeichnet werden kann, kann als eine Absperrklappe, ein Scheibenventil, ein Absperrschieber und bzw. oder ein Quetschventil ausgebildet sein und dient einem zuverlässigen Absperren eines Stoffstroms zwischen Abscheider und Auffangelement. Typischerweise ist das kombinierte Anschluss- und Verschlusselement Teil des Abscheiders, kann aber auch stattdessen Teil der Vorrichtung zur Aufnahme von Partikeln sein. Das kombinierte Anschluss- und Verschlusselement kann mechanisch von Hand oder automatisiert betrieben werden. Alternativ oder zusätzlich kann auch ein automatischer pneumatischer oder elektrischer Betrieb vorgesehen sein. Ebenso kann das kombinierte Anschluss- und Verschlusselement identisch mit dem Auffangelement bzw. mit diesem einteilig, d. h. integriert, ausgebildet sein.

Ein Abscheider weist einen Auslass auf und die zuvor beschriebene Vorrichtung kann entsprechend an dem Auslass (und damit auch an dem Abscheider) befestigbar sein.

Das Auffangelement ist vorzugsweise unterhalb des Auslasses angeordnet, so dass im Abscheider separierte Partikel bereits in Folge der Gravitationskraft in das unterhalb des Abscheiders angeordnete Auffangelement gelangen.

Der Abscheider kann als Absauganlage und bzw. oder Filteranlage oder Fliehkraftabscheider ausgebildet sein. Allgemein soll unter dem Begriff "Abscheider" im Rahmen dieser Schrift eine Vorrichtung zur Separierung von Partikeln aus einem Prozessgas verstanden werden, die typischerweise technisch gasdicht ausgebildet ist.

Der Auslass, der auch als "Abscheider Austrag" bezeichnet werden kann, kann als ein Trichter ausgestaltet sein bzw. trichterförmig sein und dient in der Regel einem passiven Partikelaustrag mittels Schwerkraft.

Bei einem Verfahren zum Aufnehmen von Partikeln wird ein Auffangelement mit einer Öffnung über einem an die Öffnung des Auffangelements anbringbaren Anschlusselement mit einem öffen- und schließbares kombiniertes Anschluss- und Verschlusselement eines Abscheiders verbunden. Im Falle des mit dem Abscheider verbundenen Auffangelements gelangen die Partikel aus dem Abscheider kommend durch das geöffnete kombinierte Anschluss- und Verschlusselement durch die Öffnung des Auffangelements in das Auffangelement und im Falle des mit den Partikeln gefüllten Auffangelements wird das kombinierte Anschluss- und Verschlusselement verschlossen, das Auffangelement von dem Abscheider getrennt und verschlossen sowie im geschlossenen Zustand entnommen.

Das Verfahren kann auch derart gestaltet sein, dass ein Sammelbehälter über das Anschlusselement und das öffen- und schließbare kombinierte Anschluss- und Verschlusselement mit dem Abscheider verbunden wird. Ein Auffangbehälter mit einer Öffnung, der innerhalb des Sammelbehälters angeordnet ist und aus dem Sammelbehälter entnommen werden kann, wird derart in dem Sammelbehälter angeordnet, dass bei im Fall des mit dem Abscheider verbundenen Sammelbehälters die Partikel aus dem Abscheider kommend durch das geöffnete kombinierte Anschluss- und Verschlusselement durch eine Öffnung des Auffangbehälters in den Auffangbehälter gelangen, und anschließend im Fall des mit den Partikeln gefüllten Auffangbehälters, d. h. insbesondere, sobald der Auffangbehälter mit den Partikeln gefüllt ist, das kombinierte Anschluss- und Verschlusselement verschlossen wird, der Sammelbehälter von dem Abscheider getrennt und der Auffangbehälter aus dem Sammelbehälter entnommen wird.

Es kann vorgesehen sein, dass in das Auffangelement vor dem Öffnen des kombinierten Anschluss- und Verschlusselements, d. h. noch ohne erfolgten Partikeleintrag in den Auffangbehälter, während des Aufnehmens der Partikel und bzw. oder nach dem Entfernen des Auffangbehälters aus dem Sammelbehälter ein Inertisierungsmittel in den Auffangbehälter eingefüllt wird. Hierdurch können zu einem jeweils gewünschten Zeitpunkt chemische Reaktionen der Partikel unterbunden werden, insbesondere kann auch bereits bei Beginn der Aufnahme der Partikel das Inertisierungsmittel bereits in dem Auffangbehälter enthalten sein, d. h. der Auffangbehälter ist bereits mit dem Inertisierungsmittel befüllt.

Das Verfahren wird typischerweise mit der zuvor beschriebenen Vorrichtung durchgeführt, d. h. die beschriebene Vorrichtung ist zum Durchführen des Verfahrens eingerichtet.

Ausführungsbeispiele der Erfindung sind in den Zeichnungen dargestellt und werden nachfolgend anhand der Figuren 1 bis 3 erläutert. Es zeigen:
- Fig. 1: eine schematische seitliche Ansicht einer Vorrichtung zum Austrag und sicheren Aufnahme von Partikeln;
- Fig. 2: eine Figur 1 entsprechend Ansicht eines Oberteils eines weiteren Ausführungsbeispiels der Vorrichtung mit Filterelement und
- Fig. 3: eine den Figuren 1 und 2 entsprechende Ansicht des in Figur 2 wiedergegebenen Ausführungsbeispiels mit dem Filterelement innerhalb des Auffangbehälters.

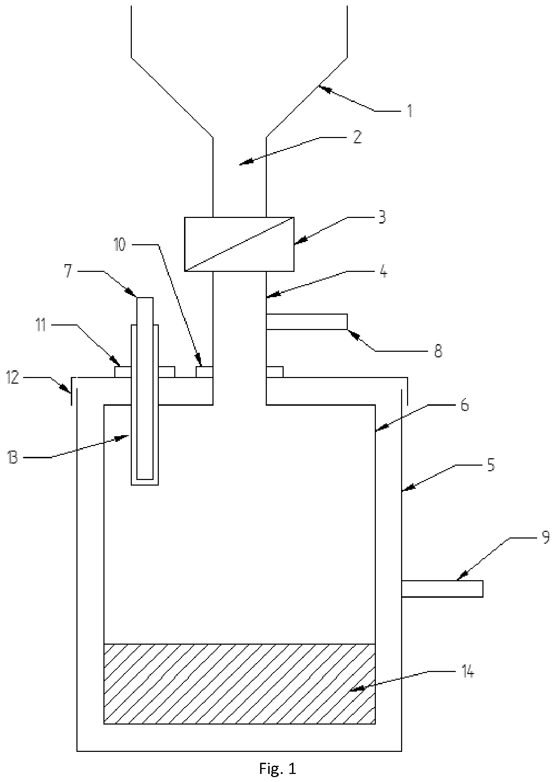

Figur 1 zeigt in einer schematischen seitlichen Ansicht eine Vorrichtung zum Austrag und zur sicheren Aufnahme von Partikeln, die aus einem Abscheider 1 ausgetragen werden, nachdem sie aus einem die Partikel ursprünglich enthaltenden Rohgas separiert wurden. Am Abscheider 1 bzw. einem Abscheideraustrag 2 ist ein Absperrelement 3 als kombiniertes Anschluss- und Verschlusselement angebracht, das geöffnet und geschlossen werden kann und entsprechend einen Stoffstrom erlaubt oder unterbindet.

An dem Absperrelement 3 ist ein Sammelbehälter 5 angeordnet, der allerdings auch von dem Absperrelement 3 abgekoppelt werden kann. In dem Sammelbehälter 5 befindet sich ein geschlossener Foliensack als Auffangbehälter 6. Somit bilden der Sammelbehälter 5 und der Auffangbehälter 6 zusammen ein Auffangelement für die Partikel. In weiteren Ausführungsbeispielen kann jedoch auch vorgesehen sein, dass lediglich der Sammelbehälter 5 oder nur der Auffangbehälter 6 als Auffangelement verwendet werden. Der Sammelbehälter 5 bzw. der Foliensack dienen der Aufnahme der Partikel, die über das Absperrelement 3 in den unterhalb des Abscheiders 1 angeordneten Sammelbehälter bzw. in den im Sammelbehälter angeordneten Auffangbehälter 6 gelangen.

Die Vorrichtung verfügt über mindestens einen Füllstandssensor 7, 8, 9, wobei in dem in Figur 1 dargestellten Ausführungsbeispiel insgesamt drei Füllstandssensoren 7, 8 und 9 vorgesehen sind. Der erste Füllstandssensor 7 ist am Sammelbehälter 5 an dessen Oberseite bzw. Deckel 12 in einem Füllstandssensoradapter 13 angeordnet und weist in Richtung des Stoffstroms vom Abscheider 1 in den Sammelbehälter 5. Dieser Füllstandssensor 7 ist zudem in direktem, d. h. unmittelbar berührendem Kontakt mit dem Auffangbehälter. Der zweite Füllstandssensor 8 ist senkrecht lagernd an einem zweiten Füllstandssensoradapter an einem Adapterelement 4 bzw. Anschlussadapter als Anschlusselement angeordnet, durch das die Partikel nach dem Absperrelement in den Auffangbehälter 6 gelangen. Der dritte Füllstandssensor 9 schließlich ist seitlich an dem Sammelbehälter 5 in einem dritten Füllstandssensoradapter angeordnet. Auch wenn in dem in Figur 1 dargestellten Ausführungsbeispiel drei Füllstandssensoren 7, 8 und 9 gezeigt sind, wird in der Regel nur ein einziger Füllstandssensor 7, 8, 9 verwendet. Das Adapterelement 4 kann als einzelnes Bauteil form- oder kraftschlüssig über eine Schnittstelle 10, die beispielsweise als Kupplung ausgebildet sein kann, mit dem Sammelbehälter 5 verbunden sein. Die Schnittstelle kann hierbei aus LDPE, HDPE, PP oder POM ausgebildet sein und an einen Deckel 12 des Sammelbehälters 5 geklebt, geschweißt oder geschraubt sein. Vorzugsweise ist ein Dichtelement wie ein O-Ring, ein Quadring, eine Stangendichtung, eine Kolbendichtung oder eine aufblasbare Dichtung vorgesehen, um eine technisch gasdichte Verbindung herzustellen. In der Regel erfolgt eine lineare Führung des Adapterelements 4 in senkrechter Richtung.

Bei dem in Figur 1 dargestellten Ausführungsbeispiel verfügt der Sammelbehälter 5 über den Deckel 12, an dem mindestens eine Schnittstelle 10 für das Adapterelement 4 und eine Schnittstelle 11 für einen Füllstandssensoradapter angebracht ist. Diese Schnittstelle kann auch als Kupplung ausgebildet sein und LDPE, HDPE, PP oder POM aufweisen oder daraus bestehen sowie die bereits im Zusammenhang mit der Schnittstelle 10 beschriebene Eigenschaften aufweisen. Der Deckel 12 kann auf dem Sammelbehälter 5 durch eine Verspannung mit einem Verspannring, eine Schraubverbindung, eine Klippverbindung und bzw. oder eine Pressverbindung befestigt sein und ist üblicherweise aus dem gleichen Werkstoff wie der Sammelbehälter 5.

Der Sammelbehälter 5 oder der Auffangbehälter 6 können bereits mit Inertisierungsmittel 14 befüllt sein oder während einem der Prozessschritte befüllt werden. Es kann auch vorgesehen sein, die Befüllung mit Inertisierungsmittel erst nach Entnahme des Sammelbehälters 5 vorzunehmen, d. h. nachdem der Sammelbehälter 5 vom Abscheider 1 am Absperrelement 3 getrennt und entnommen wurde.

Die Füllstandssensoren 7, 8 und 9 können alle nach einem identischen Messprinzip arbeiten, z. B. alle als kapazitiv arbeitende Sensoren ausgebildet sein, oder zumindest zwei der Sensoren können voneinander abweichende Messprinzipien aufweisen. Der erste Füllstandssensor 7 ist hierbei in direktem Kontakt mit dem Auffangbehälter 6 und kann durch eine Wand des Auffangbehälters 6 hindurch den Füllstand bestimmen. Der an dem Sammelbehälter 5 angeordnete dritte Füllstandssensor 9 ist dazu ausgebildet, durch die Sammelbehälterwand hindurch den Füllstand zu detektieren. In der Regel kommt keiner der Füllstandssensoren 7, 8, 9 in Kontakt mit den Partikeln und die Füllstandssensoren 7, 8, 9 sind in Adapterhalterung abnehmbar anbringbar fixiert.

Am Absperrelement 3 kann ein Sensor vorgesehen sein, der vorzugsweise elektrisch den korrekten Sitz des Sammelbehälters 5 überprüft und ein Öffnen nur bei Feststellen des korrekten Sitzes ermöglicht. Da der Sammelbehälter 5 und der Auffangbehälter 6 durch den Deckel 12 geschlossen sind, kann bei einem geschlossenen Absperrelement 3 das Adapterelement 4 mit einem Verschlussstopfen verschlossen werden, das Adapterelement 4 selbst in den Sammelbehälter gedrückt werden und der Sammelbehälter samt den aufgenommenen Partikeln als Containment im geschlossenen Zustand entnommen werden.

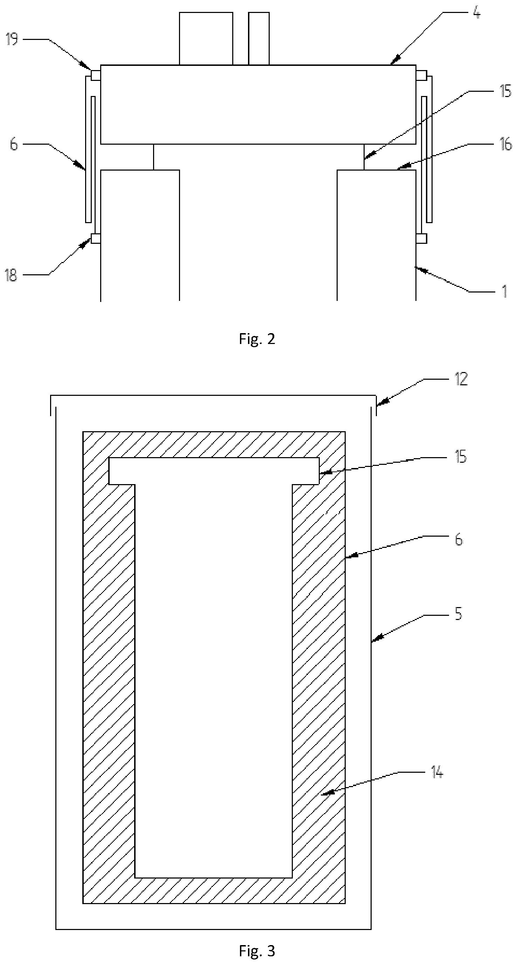

Figur 2 zeigt in einer Figur 1 entsprechenden Ansicht ein weiteres Ausführungsbeispiel der Vorrichtung, die nun auch zur sicheren Entnahme eines Filterelements ausgebildet ist. Am Abscheider 1 bzw. an einer Filtermontageplatte 16 ist das Filterelement 15 montiert. Auf dem Filterelement 15 befindet sich eine Anschlussbaugruppe als Anschlusselement 4. Die Filtermontageplatte 16 dient zur mechanischen Aufnahme des Filterelements 15 und ist eine Dichtfläche für eine Filterelementdichtung und kann geschraubt, gesteckt, geklippt oder geklemmt sein. Das Filterelement 15 kann als Patronenfilter oder als Kassettenfilter vorliegen.

Der Abscheider 1, das Filterelement 15 und die Anschlussbaugruppe 4 sind mit einem Verschlusssystem ausgerüstet. An der Außenseite des Abscheiders 1 befindet sich ein Anschluss für den Auffangbehälter 6, der als Foliensack ausgestaltet in aufgewickelter Form hieran über zwei Anschlüsse 18 und 19 montiert werden kann. Der Abscheider 1 kann an der Anschlussbaugruppe 4 geöffnet werden. Die Anschlussbaugruppe 4 wird hierbei angehoben und der Auffangbehälter 6 ausgerollt. Das Filterelement 3 wird dabei in den Auffangbehälter 6 gezogen. Der Auffangbehälter 6 wird oberhalb und unterhalb des Filterelements 15 verschlossen und das Filterelement 15 zusammen mit dem Auffangbehälter entnommen und in dem Sammelbehälter 5 abgestellt, so dass auch in diesem Fall eine geschlossene Entnahme möglich ist. Der Auffangbehälter 6 und der Sammelbehälter 5 können anschließend mit Inertisierungsmittel befüllt werden.

In Figur 3 ist in einer Figur 1 entsprechenden Ansicht ist der Sammelbehälter 5 mit darin eingebrachtem Auffangbehälter 6 gezeigt. In diesem Zustand kann das mit den Partikeln gefüllte Filterelement 15 sicher transportiert und entsorgt werden.

In einer bevorzugten Ausführungsform ist der Auffangbehälter 6 (typischerweise als Foliensack ausgebildet) in dem starren Sammelbehälter 5 angeordnet und über das Anschlusselement 4 mit dem Abscheider 1 verbunden. Der starre Sammelbehälter 5 verfügt typischerweise über eine Sicherheitsschleuse in Form einer verriegelbaren Klappe, um ein ungewolltes Öffnen und somit ein unerwünschtes Entfernen der Partikel aus dem Auffangbehälter 6 zu vermeiden. Falls der Auffangbehälter 6 als Foliensack ausgebildet ist, wird dieser von einer unterhalb des Foliensacks angeordneten Bodenplatte gehalten, die den Auffangbehälter von unten stützt und vor dem Entnehmen des Auffangbehälters 6 abgesenkt wird. Diese Bodenplatte kann festgeschraubt sein, in weiteren Ausführungsbeispielen aber beispielsweise auch festgeklemmt sein. Durch die Öffnung des Foliensacks, die an dem Anschlusselement angebracht ist, gelangen die Partikel durch das kombinierter Anschluss- und Verschlusselement 3 in den Foliensack. Vor dem Absenken der Bodenplatte wird dieses Anschluss- und Verschlusselement 3 geschlossen, um keinen weiteren Partikelaustrag aus dem Abscheider zu ermöglichen. Alternativ kann auch kein separates Anschluss- und Verschlusselement 3 vorhanden sein, sondern der Auffangbehälter 6 in Form des Foliensacks auch das kombinierte Anschluss- und Verschlusselement 3 bilden. Der Auffangbehälter 6 würde in diesem Fall stets Partikel aus dem Abscheider aufnehmen, sofern die Öffnung des Auffangelements 6 an dem Anschlusselement 4 des Abscheiders angebracht ist. Ein geschlossener Zustand des kombinierten Anschluss- und Verschlusselements 3 kann dann erreicht werden, wenn das Auffangelement 6 entsprechend des nachfolgend beschriebenen Verfahrens abgeklemmt wird und somit keine weiteren Partikel in das bereits gefüllte Auffangelement 6 gelangen können.

Wie in den zuvor erläuterten Ausführungsbeispielen kann ein Filterelement vorgesehen sein bzw. in dem Foliensack ein Inertisierungsmittel enthalten sein. Alternativ oder zusätzlich kann der Füllstandssensor 7, 8, 9 im Auffangbehälter 6 angeordnet sein. Prinzipiell kann insbesondere bei diesem Ausführungsbeispiel auch eine Kombination mit den Merkmalen der in den Figuren 1-3 dargestellten Ausführungsbeispielen erfolgen, wobei auch die in diesen Figuren gezeigten Merkmale untereinander kombiniert werden können.

Im Falle des Einsatzes eines Foliensacks wird dieser nach dem Entfernen der Bodenplatte infolge der Schwerkraft und der im Foliensack enthaltenen Partikel nach unten fallen und kann abgeschnürt werden. Das Abschnüren erfolgt in der Regel durch ein doppeltes Abbinden mittels zweier räumlich voneinander beabstandeter Klemmen (die typischerweise aus Plastik gebildet sind) oder Kabelbinder. Nachfolgend kann der Foliensack, der auch als Austragsfolie bezeichnet werden kann, zwischen den beiden Klemmen oder unterhalb der untersten Klemme (unabhängig davon, ob eine Klemme oder zwei Klemmen verwendet werden) abgeschnitten und aus dem Sammelbehälter 5 entnommen werden. Anschließend wird der mit der Klemme verschlossene Foliensack wieder oberhalb der Bodenplatte angeordnet, die Bodenplatte an dem Sammelbehälter 5 befestigt und die Sicherheitsschleuse verschlossen. Somit ist die Vorrichtung wieder bereit für die Aufnahme neuer Partikel.

Lediglich in den Ausführungsbeispielen offenbarte Merkmale der verschiedenen Ausführungsformen können miteinander kombiniert und einzeln beansprucht werden.

## Patentansprüche

1. Vorrichtung zur Aufnahme von Partikeln, mit
einem Auffangelement (5, 6) mit einer Öffnung und
einem an die Öffnung des Auffangelements (5, 6) anbringbaren Anschlusselement (4), wobei
das Auffangelement (5, 6) über das Anschlusselement (4) mit einem öffen- und schließbares kombiniertes Anschluss- und Verschlusselement (3) eines Abscheiders (1) verbindbar ist, wobei
im Falle des mit dem Abscheider (1) verbundenen Auffangelements (5, 6) die Partikel aus dem Abscheider (1) kommend durch das geöffnete kombinierte Anschluss- und Verschlusselement (3) durch die Öffnung des Auffangelements (5, 6) in das Auffangelement (5, 6) gelangen, und
im Falle des mit den Partikeln gefüllten Auffangelements (5, 6) das kombinierte Anschluss- und Verschlusselement (3) verschließbar ist, das Auffangelement (5, 6) von dem Abscheider (1) getrennt und verschlossen sowie im geschlossenen Zustand entnommen werden kann.

2. Vorrichtung nach Anspruch 1, **dadurch gekennzeichnet, dass** in dem Auffangelement (5, 6) oder an dem Anschlusselement (4) mindestens ein Filterelement (15) angeordnet ist.

3. Vorrichtung nach einem der Ansprüche 1 oder 2, **dadurch gekennzeichnet, dass** in dem Auffangelement (5, 6) mindestens ein Inertisierungsmittel (14) enthalten ist.

4. Vorrichtung nach einem der vorhergehenden Ansprüche, **dadurch gekennzeichnet, dass** das Auffangelement als starrer Sammelbehälter (5), als flexibler Auffangbehälter (6) oder als in dem Sammelbehälter (5) angeordneter Auffangbehälter (6) ausgestaltet ist.

5. Vorrichtung nach Anspruch 4, **dadurch gekennzeichnet, dass** der Auffangbehälter (6) als ein Foliensack aus Kunststoff ausgebildet ist.

6. Vorrichtung nach einem der vorhergehenden Ansprüche, **dadurch gekennzeichnet, dass** in dem Auffangelement (5, 6) mindestens ein Füllstandssensor (7, 8, 9) angeordnet ist.

7. Abscheider (1) mit einem Auslass (2), an den eine Vorrichtung nach einem der Ansprüche 1-6 befestigbar ist.

8. Abscheider nach Anspruch 7, **dadurch gekennzeichnet, dass** das Auffangelement (6) unterhalb des Auslasses (2) angeordnet ist.

9. Verfahren zum Aufnehmen von Partikeln, bei dem
ein Auffangelement (5, 6) mit einer Öffnung über ein an die Öffnung des Auffangelements (5, 6) anbringbares Anschlusselement (4) mit einem öffen- und schließbaren kombinierten Anschluss- und Verschlusselement (3) eines Abscheiders (1) verbunden wird, wobei
im Falle des mit dem Abscheider (1) verbundenen Auffangelements (5, 6) die Partikel aus dem Abscheider (1) kommend durch das geöffnete kombinierte Anschluss- und Verschlusselement (3) durch die Öffnung des Auffangelements (5, 6) in das Auffangelement (5, 6) gelangen, und
im Falle des mit den Partikeln gefüllten Auffangelements (5, 6) das kombinierte Anschluss- und Verschlusselement (3) verschließbar ist, das Auffangelement (5, 6) von dem Abscheider (1) getrennt und verschlossen sowie im geschlossenen Zustand entnommen wird.

10. Verfahren nach Anspruch 9, **dadurch gekennzeichnet, dass** in das Aufnahmeelement (5, 6) vor dem Öffnen des kombinierten Anschluss- und Verschlusselements (3), während des Aufnehmens der Partikel oder nach dem Entfernen ein Inertisierungsmittel (14) eingefüllt wird.
